# EUROPÄISCHE PATENTANMELDUNG

(11) **EP 0 845 325 A1**
(43) Veröffentlichungstag der Anmeldung: **03.06.1998**
(21) Anmeldenummer: 96810842.3
(22) Anmeldetag: 02.12.1996
(51) Int. Cl.: B23Q 1/01

(54) **Vorrichtung zum Bearbeiten von Werkstücken**

(71) Anmelder: Huber Engineering AG, 8212 Neuhausen am Rheinfall (CH)
(72) Erfinder: Huber, Eduard, 8212 Neuhausen am Rheinfall (CH)
(74) Vertreter: Heubeck, Bernhard

(57) **Zusammenfassung**

Die Vorrichtung enthält eine Platte (1), die als Bindeglied zwischen einem Unterteil (2) sowie einem Arbeitstisch (3) und einem Werkzeugständer (4) vorgesehen ist. Dadurch lässt sich ein Gestaltungskonzept verwirklichen, welches die Herstellung der Vorrichtung in Form von modularen Baureihen ermöglichen.

## Beschreibung

Die Erfindung betrifft eine Vorrichtung zum Bearbeiten von Werkstücken gemäss dem Oberbegriff des Anspruches 1.

In der EP-A-0 652 075 ist eine Vorrichtung beschrieben, welche ein Gestell, einen Arbeitstisch und einen Werkzeugständer aufweist, der als Portal ausgebildet ist. Das Portal und der Arbeitstisch bestehen aus Nichtmetall. Das Portal ist am Arbeitstisch gelagert.

Der Erfindung, wie sie in den Ansprüchen gekennzeichnet ist liegt die Aufgabe zugrunde, die bekannte Vorrichtung zu verbessern.

Durch die Anwendung der Platte als Bindeglied zwischen dem Unterteil und dem Arbeitstisch sowie Werkzeugständer wird ein Gestaltungskonzept erhalten, welches die Herstellung der Vorrichtung in Form von modularen Baureihen ermöglicht. Damit verbunden ist ein einfacher Aufbau und eine kostengünstige Herstellung. Ferner können mit diesem Konzept sogenannte LOW COSTS- und HIGH TECH-Vorrichtungen verwirklicht werden. Mit der Ausbildung des Unterteiles, der Platte, des Arbeitstisches und des Werkzeugständers aus Nichtmetall, insbesondere aus Naturstein wird der Einfluss der Wärmeausdehnung und der Schwingungen während der Bearbeitung eines Werkstückes grösstenteils beseitigt.

Im folgenden wird die Erfindung anhand der beiliegenden Zeichnung erläutert.

Es zeigen:
- Fig. 1: eine Seitenansicht einer ersten Ausführungsform einer erfindungsgemässen Vorrichtung;
- Fig. 2: eine Draufsicht auf eine Ausführungsform eines Unterteiles;
- Fig. 3: einen Schnitt mit einer Ausführungsform eines Unterteiles;
- Fig. 4: eine Ansicht einer ersten Ausführungsform einer Lageranordnung für den Werkzeugständer;
- Fig. 5: eine Seitenansicht einer zweiten Ausführungsform einer erfindungsgemässen Vorrichtung und

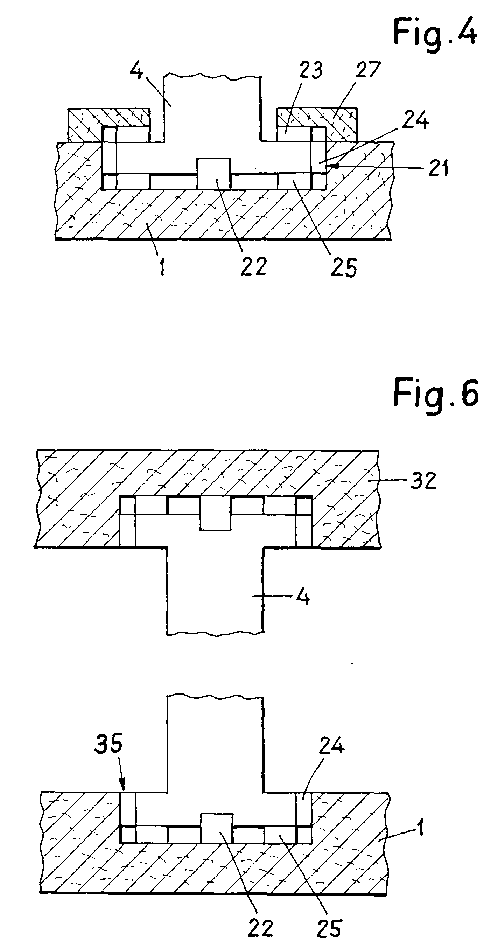

- Fig. 6: eine Ansicht einer zweiten Ausführungsform einer Lageranordnung für den Werkzeugständer.

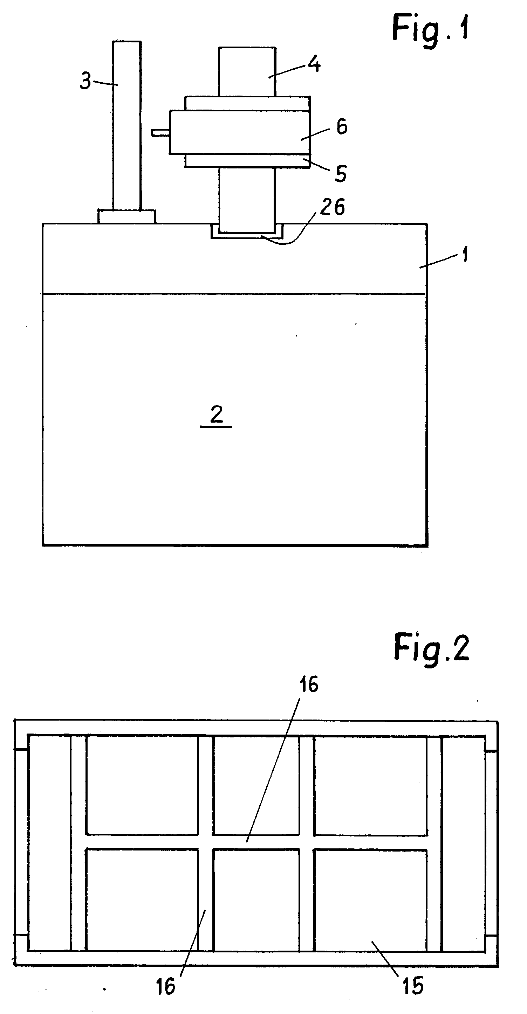

Es wird auf die Figuren 1 bis 4 Bezug genommen. Bei der hier in Rede stehenden Vorrichtung ist eine Platte 1 zwischen einem Unterteil 2 sowie einem Arbeitstisch 3 und Werkzeugständer 4 angeordnet. Die Platte 1, der Unterteil 2, der Arbeitstisch 3 und der Werkzeugständer 4 bestehen aus Naturstein, insbesongere aus Granit. Am Werkzeugträger 4 ist ein Schlitten 5 angeordnet, die Z-Achse ist verschiebbar und mit einer Bearbeitungseinrichtung 6 versehen, die in der Y-Achse verschiebbar ist.

Der Unterteil 2 besteht aus einer Bodenplatte 15 und mehreren Wandteilen 16, die mit der Bodenplatte fest verbunden sind, z. B. verklebt. Die geometrische Anordnung der Wandteile wird einerseits durch den Raumbedarf von Steuer-und Servicevorrichtungen und andererseits durch die Anforderung einer starren Konstruktion bestimmt, d.h. der mit der Platte 1 verbundene Unterteil 2 verhält sich im wesentlichen wie ein Granitblock ( Fig.2 ).

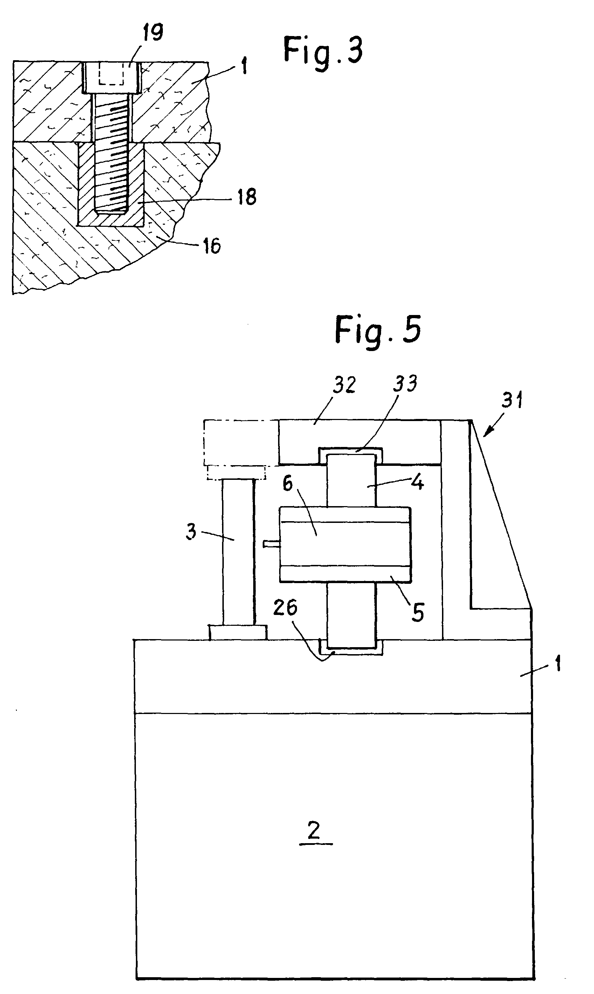

Die Platte 1 ist am Unterteil 2 montiert. Hierzu wird eine Gewindehülse 18, die in dem aus Granit bestehenden Teil verankert ist und eine Schraube 19 verwendet, die in die Gewindehülse eingeschraubt ist ( Fig. 3 ).

Der Arbeitstisch 3 ist an der Platte ortsfest montiert und zwar verschraubt oder verklebt. Der Werkzeugständer 4 ist als freistehende Säule ausgebildet. Die Säule ist mit einer Lageranordnung 21 versehen und einer mit Vorschubeinrichtung 22 in Eingriff, um den Werkzeugständer 4 in der X-Achse zu verschieben. Die Lageranordnung ist ein Gaslager, das drei Lagerelemente 23,24,25 umfasst, die an der Säule befestigt sind. In der Platte 1 ist eine Ausnehmung 26 ausgebildet, in welcher das Gaslager verschiebbar angeordnet ist. Das Gaslager ist mittels Halteorgane 27 in der Ausnehmung 26 gehalten, derart, dass der Werkzeugständer zwangsgeführt an der Platte 1 angeordnet ist. Die Vorschubeinrichtung 22 ist ortsfest in der Ausnehmung 26 angeordnet. Die Vorschubeinrichtung ist ein Spindelantrieb ( Fig. 4 ).

Die Fig. 5 zeigt eine zweite Ausführungsform der Vorrichtung, die eine Weiterentwicklung im erfindungsgemässen Konzept ist. Die Vorrichtung umfasst, die Platte 1, das Unterteil 2, den Arbeitstisch 3, den Werkzeugständer 4 und einen Oberteil 31. Der Oberteil 31 erstreckt sich über die Länge oder eine Teillänge der Platte 1 und weist einen plattenförmigen Ausleger 32 aus. Der Oberteil 31 ist mit der Platte verschraubt oder verklebt. In dem Ausleger 32 ist eine Ausnehmung 33 ausgebildet, welche gleich oder ähnlich wie die Ausnehmung 26 in der Platte 1 ausgebildet ist. Wie die Fig. 5 ferner zeigt, kann der Arbeitstisch 3 beidseits am Ausleger befestigt sein. Mit dieser Ausführungsform wird eine besonders steife und schwingungsarme Vorrichtung gebildet.

Der Werkzeugständer 4 ist an seinen Enden jeweils mit einer Lageranordnung 35 versehen. Die Lageranordnung ist ein Gaslager oder mechanische Führungselemente mit Lagerelementen 24,25, die an beiden Enden des Werkzeugträges 4 montiert sind, so dass der Werkzeugträger 4 zwangsgeführt ist.

Die Befestigungsstellen gemäss Fig. 3 werden in einem Raster in der Platte 1 angeordnet. Dadurch kann die Vorrichtung in vorteilhafter Weise umgebaut und/oder ausgebaut werden, derart, dass ein weiterer Abbeitstisch und/oder Werkzeugständer vorgesehen werden, wobei die Arbeittische und/oder die Werkzeugständer ortsfest oder verschiebbar angeordnet werden. Die Verschiebung kann gleichzeitig oder einzeln in gleicher Richtung oder gegenläufig erfolgen. Als Lageranordnung können ein hydraulisches Lager, Führungsschienen aus Stahl oder mechanische Führungselemente verwendet werden. Anstelle des Spindelgetriebes kann ein Liearantrieb als Direktantrieb angewendet werden.

## Patentansprüche

1. Vorrichtung zum Bearbeiten von Werkstücken mit einem Unterteil (2), mindestens einem Arbeitstisch (3) und mindestens einem Werkzeugständer (4), dadurch gekennzeichnet, dass eine Platte (1) vorgesehen ist, welche zwischen dem Unterteil (2) sowie dem Arbeitstisch (3) und dem Werkzeugständer (4) angeordnet ist und dass der Unterteil, die Platte, der Werkzeugständer und der Arbeitstisch aus einem Nichtmetall bestehen.

2. Vorrichtung nach Anspruch 1, dadurch gekennzeichnet, dass die Platte (1), der Unterteil (2 ), der Arbeitstisch (3) und der Werkzeugständer (4) aus einem Material bestehen, ausgewählt aus der Gruppe Naturstein, Kunststein, Kunststoff oder dergleichen.

3. Vorrichtung nach einem der Ansprüche 1 oder 2, dadurch gekennzeichnet, dass der Unterteil (1) aus einer Bodenplatte (15) und geometrisch angeordneten Wandteilen (16) besteht, derart, dass mindestens eine Kammer zur Unterbringung einer Service- und Steuereinrichtung entsteht.

4. Vorrichtung nach einem der Ansprüche 1 bis 3, dadurch gekennzeichnet, dass die Platte (1) an dem Unterteil (2) montiert ist, dass der Arbeitstisch (3) ortsfest oder verschiebbar an der Platte (1) angeordnet ist und dass der Werkzeugständer (4) ortsfest oder verschiebbar an der Platte (1) angeordnet ist, wobei eine Lageranordnung (21) am Arbeitstisch (3) oder am Werkzeugständer (4) angeordnet ist.

5. Vorrichtung nach einem der Ansprüche 1 bis 4, gekennzeichnet durch einen Oberteil (31), der aus Nichtmetall vorwiegend Naturstein besteht.

6. Vorrichtung nach einem der Ansprüche 1 bis 5, dadurch gekennzeichnet, dass der Oberteil (31) auf der Platte (1) montiert ist.

7. Vorrichtung nach einem der Ansprüche 1 bis 6, dadurch gekennzeichnet, dass der Werkzeugständer (4) ortsfest oder verschiebbar an der Platte (1) und/oder am Oberteil (31) angeordnet ist.

8. Vorrichtung nach einem der Ansprüche 1 bis 7 mit mindestens einer Vorschubeinrichtung für den Werkzeugständer (4), dadurch gekennzeichnet, dass die Vorschubeinrichtung (22) in der Platte angeordnet ist und dass der Werkzeugständer (4) an einem Ende mit der Vorschubeinrichtung verbunden ist.

9. Vorrichtung nach Anspruch 8, dadurch gekennzeichnet, dass eine zweite Vorschubeinrichtung (22) im Oberteil (31) angeordnet ist und dass der die Werkzeugständer (4) an beiden Enden mit der Vorschubeinrichtung (22) verbunden ist.
